# EUROPEAN PATENT APPLICATION

(11) **EP 1 936 517 A1**
(43) Date of publication of application: **25.06.2008**
(21) Application number: 06291987.3
(22) Date of filing: 19.12.2006
(51) Int. Cl.: G06F 17/30

(54) **Method for distributing non real-time media in a non real-time media distribution system, a related system, a related media server and media client**

(71) Applicant: Alcatel Lucent, 75008 Paris (FR)
(72) Inventor: Kisel, Andrey, Maidenhead, Berkshire SL6 8DH (GB); Robinson, David, Aldbourne, Wiltshire SN8 2NP (GB)
(74) Representative: Narmon, Gisèle Marie Thérèse

(57) **Abstract**

The present invention relates to a method for distributing non real-time media in a non real-time media distribution system. The non real-time media distribution system comprises a non-real time media server and a non-real time media client where the non-real time media server and the media client is coupled over a communications network. This method comprises the steps of distributing the non-real time media to the non real-time media client, over the communications network coupling the media server to the media client. The method further comprises the step of sending a real-time control message from a second control protocol agent at the non-real time media client to a first control protocol agent at the media server for controlling the distributing of non real-time media. The step of distributing the non real-time media from the non real time server to the media client is based on the real-time distribution control message.

## Description

The present invention relates to a method for distributing non real-time media in a non real-time media distribution system as described in the preamble of claim 1 and the related system as described in the preamble of claim 3 and the related devices in claim 9 and claim 11.

Such a method for distributing non real-time media in a non real-time media distribution system, the related system and related devices are already well known in the art.

Such non real-time media distribution system comprises at least one non-real time media server and a plurality non real-time media clients. The non-real-time media server, such as a video on demand server, is able, at request of the media client, to distribute non-real time media assets to one or more media clients, over a network, such as the Internet, coupling the media server to the media client.

In the typical scenario the requested media asset is distributed in the real-time at the asset encoded bit-rate. However, there are situations when media asset delivery cannot be done at the asset-encoded bit-rate or is desirable to be done at a different bit-rate.

The asset-encoded bit-rate may exceed maximum downlink bandwidth, in which case real-time delivery cannot be achieved which for instance, can arise during distribution of high definition video assets (HDTV) over standard definition (SDTV) video delivery subsystems. In this case, media asset can be distributed (downloaded) and stored on the client device for future viewings.

In another case a user may request a media-asset for future viewing and the application layer may decide to download this asset ahead of time during low system activity for future viewings which will be dealt with in a non real-time distribution session.

Most existing solutions for non real-time media asset distribution use industry standard protocols such as FTP (RFC 959) or HTTP (RFC 1945) to download such media assets in non real-time mode. These existing non real-time media asset download protocols in this way saturate the available network bandwidth. Such download session typically takes place when no other services are provisioned and no bandwidth is being used by other services.

The disadvantage of this that after media download session is initiated, it normally takes place at the maximum available bit-rate and cannot be paused or stopped and restarted subsequently. If a new higher priority service (e.g. VOD, high speed internet access, voice over IP call) is required during existing content download session(s), the session(s) typically has to be stopped to free sufficient bandwidth and then re-started from the beginning.

The problem of the known non real-time media distribution system, the related non real-time media server, client device and non real-time media distribution method is that a non real-time media distribution from a media server to a client device is done at a maximum rate, hence it is not possible to allow an additional service at the same time as all available bandwidth is in use without stopping the ongoing non real-time media distribution session.

The object of our present invention is to provide with non real-time media distribution system, a related non real-time media server, client device and non real-time media distribution method of the above known type but wherein during such a media distribution session an alternative service can be provisioned to the media client.

According to the invention, this object is achieved by the method described in claim 1, the system described in claim 3 and the related devices in claims 9 and claim 11.

Indeed, this object is achieved due to the fact that the system for non real-time media distribution is adapted to send a real-time control message from the non-real time media client to the non real-time media server for controlling the distributing (start, stop, pause, restart, bit-rate adaptation) of non real-time media and additionally that the system further is adapted to distribute the non real-time media from the non real time media server to the non real-time media client based on the real-time control message the media client is able to notify or request the non real-time media server which non real-time media to forward, at which bit-rate or even to request the media server to stop or pause the current forwarding and subsequently to start back at the stop or pause location.

Using the real-time control message it is additionally facilitated to keep track of at the media server side which the stop/pause location of the media is and based hereon it is possible to proceed forwarding the stopped/paused media asset at the exact pause/stop location.

A further characteristic feature is described in claim2, claim 4 and claim 10.

The system for non real time media distribution further comprises a control agent for controlling the sending of the real-time control protocol message based on at least one condition, where the condition for instance may relate to the available bandwidth at the media client, a intended bandwidth use of a media client or the resource availability of the client device.

Another characteristic feature is described in claim 5.

The at least one condition may be a current bandwidth use of said non real-time media client.

An alternative characteristic feature is described in claim 6.

The at least one condition may be an intended bandwidth use of said non real-time media client.

Another characteristic feature is described in claim 7.

The at least one condition may be an application sharing of the Non real time media distribution system. The application sharing, e.g. bit-rate of file download can be reduced to freed bandwidth for VoIP call even if Bandwidth is available to guarantee quality of service. This situation may arise when several applications share the same bandwidth and resources. For example, if a user would like to synchronize his e-mail box to read e-mails off-line during content download. Ideally, the mail synchronization application would like to download all the new messages as soon as possible and then release the BW back for the content download application. User can read the e-mails off-line, respond and then synchronize his mailbox again to send all outgoing messages. Clearly, holding all available bandwidth while user reads e-mails and writes responses is inefficient. On the other hand, reserving only a small portion of bandwidth for e-mail downloads creates negative user experience. The suggested application provides mechanism for bandwidth variations between applications depending on user actions, without limiting to any bandwidth negotiation algorithms.

Another characteristic feature is described in claim 8.

The at least one condition may be a resource availability of the media client. The resource availability, e.g. client device is capable of processing only certain incoming bit rate. If Video on Demand, further referred to as VoD, is requested during content download, the speed of download should be reduced to free processing power for VoD (decryption, decoding) even if Bandwidth is available. This situation may arrive, for example, when resources of the Media Client have only limited processing power, let's say due to CPU, network card, memory or other limitation. In this scenario, even if incoming bandwidth is sufficient to continue content download at the original rate when Voice over IP, further referred to as VoIP, or videoconferencing call is initiated, the resources on the client device may not be sufficient to buffer and decode VoIP/video conferencing call, which would require to free certain processing power from content download by reducing download bandwidth.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

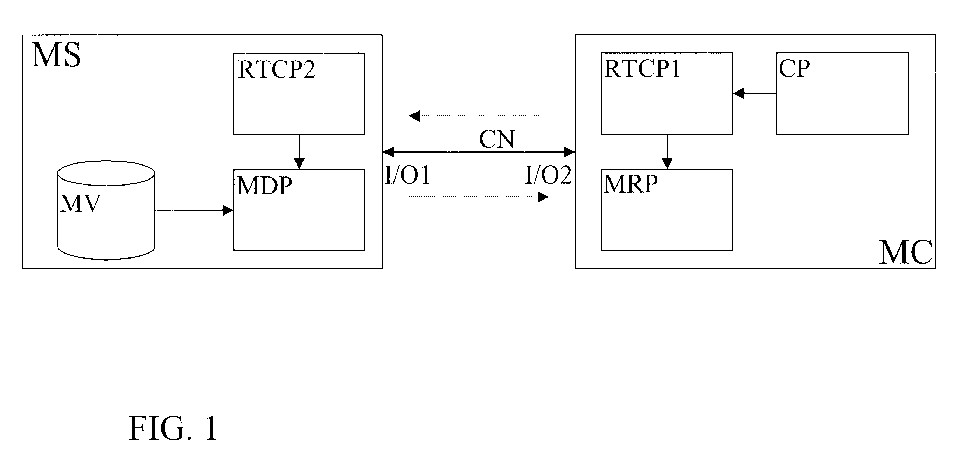

Fig. 1 represents a functional representation of a non real-time media distribution system.

In the following paragraphs, referring to the drawings in FIG. 1, an implementation of the method for distributing non real-time media in a non real-time media distribution system, the related non real-time media server MS and non real-time media client MC according to the present invention will be described. In the first paragraph of this description the main elements of the system for non real-time media distribution as presented in FIG. 1 are described. In the second paragraph, all connections between mentioned elements are defined.

Subsequently all relevant functional means of the mentioned non real-time media server and the non real-time media client as presented in FIG.1 are described followed by a description of all interconnections. In the succeeding paragraph the actual execution of the method for distributing non real-time media is described.

The system for distribution of non real-time media comprises a non real-time media server MS and a non-real time media client MC. The non real-time media server is implemented by a Media On Demand server. The non real-time media server MS holds, or has access to, a database including a plurality of media assets for distribution to users via a belonging media client MC. The non-real time media client MC may be a set-top box at the users premises or a personal computer located at the users premises.

The non-real time media client MC is coupled to the non-real time media server via a communications network CN which may include an access network at the side of the media client MC a core network such as the internet and another access network at the side of the non-real time media server MS (not shown).

The non-real time media server MS contains a media distribution part MDP that is adapted to distribute a selected media-asset to a media client MC at request of the media client MC. The non-real time media server MS further contains a media vault MV that is adapted to hold a plurality of media assets for distribution to a user via a belonging non real-time media client MC at request of such user.

Alternatively the media vault MV may be located outside the non real-time media server MS and be accessible for this non real-time media server MS. According to the present invention the non real-time media server MS additionally includes a real-time control part RTCP2, adapted to instruct the media distribution part MDP to distribute non real-time media to the media client MC based on a real-time control message forwarded by the non real-time media client MC. In the present embodiment this real-time control part RTCP2, may be implemented by means a time streaming protocol agent, further referred to as a RTSP agent, which is implemented according to the RFC 2326 standard. Alternatively, the DCM-CC standard could be chosen. The media vault MV is coupled to the media distribution part MDP which in turn is coupled with an input/output terminal to the input/output-terminal l/O1 of the non real-time media server MS. The real-time control part RTCP2, further is coupled to the media distribution part MDP.

The non real time Media Client MC contains a media reception part MRP that is adapted to receive media assets forwarded by the non real-time media server MS. The Non real time Media Client MC further comprises a real-time control part RTCP1 that in turn is adapted to send a real-time control message to the non real-time media server MS for controlling the distribution of the non real-time media to the non real-time media client MC. Additionally, the Non real time Media Client MC comprises a control part CP for controlling the real-time control part RTCP1 based on conditions at the media client MC. Such condition may be the current available bandwidth, presence of concurrent applications, services requested by user, or available resources. Also, the media client may contain a local storage to keep non real-time assets (memory, disk, flash memory, etc...)

The control part CP is coupled to the real time control part RTCP1 that in turn is coupled to the media reception part MRP. Both the media reception part MRP and the real time control part RTCP1 are coupled with an input/output-tterminal to the input/output-terminal l/O2 of the non real-time media client MC.

In order to explain the execution of the present invention it is supposed that a user corresponding to the non real-time media client MS has the intention to retrieve a certain media-asset A which is present in media vault MV. It is furthermore the case that currently no additional service at the media client is ongoing, meaning that the maximum bandwidth is available for the non real-time media client MC.

Non real-time media client MC sends a RTSP message to the non real-time media server MS for controlling said distribution of non real-time media asset A.

This RTSP message contains a distribution request with a reference to the media asset A, and a 'Speed' (at which the distribution should take place which now corresponds to the maximum bit-rate B. The real-time control part RTCP2 receives the RTSP message sent by the non real-time media client MC and subsequently instructs a media distribution part MDP to fetch media asset A from the media vault MV and distribute this media asset A to the non real-time media to said media client MC at forwarding bit rate B which is based on a real-time control message forwarded by said non real-time media client MC.

The media distribution part MDP then distributes the non real-time media asset A from said non real time media server MS to the media client MC at sending bit-rate B.

Then it is assumed that the user at a certain moment of time decides to pause the distribution of media asset A in order to be able to retrieve another media asset A2. Therefore, the non real time Media Client MC send by means of the a real-time control part RTCP a further RTSP message containing the instruction "pause" forwarding media asset A and continue forwarding media asset A2 at maximum bit-rate B. Alternately, the asset A2 can for instance be forwarded at the rate D which is say different of the maximum bit rate.

The real-time control part RTCP2 again receives the RTSP message sent by the Non real-time media client MC and subsequently instructs the media distribution part MDP to fetch media asset A2 from the media vault MV and distribute this non real-time media asset A2 to the media client MC at forwarding bit rate B which is based on a real-time control message forwarded by said non real-time media client MC. For media asset A the RTSP message additionally contains the last received byte, which is stored at the media server for later continuing the media distribution of media asset A.

The media distribution part MDP then distributes the non real-time media asset A2 from said non real time media server MS to the media client MC with a sending bit-rate B. After full receipt of media asset A2, the media client requests media server by means of a restart RTSP message to start again sending media asset A from the last received Byte on. Now due to the fact that a voice over IP phone-call is ongoing, not the maximum bandwidth is available but only say 60 % of the maximum band width B, the media distribution of asset A can only be done at bit rate which is 60 % of the maximum bit rate.

Non real-time media client MC again sends a RTSP "restart" (PLAY) message to the non real-time media server MS for controlling the distribution of non real-time media asset A. Hence, the restart RTSP message contains a distribution request with a reference to the media asset A, and a bit rate at which the distribution should take place which is 60 % of bit-rate B. The real-time control part RTCP2 receives the RTSP message sent by the Non real-time media client MC and subsequently instructs a media distribution part MDP to fetch media asset A from the media vault MV and distribute this media asset A to the non real-time media to said media client MC at forwarding bit rate which is 60 % of bit-rate B being bit rate C.

The media distribution part MDP then distributes the non real-time media asset A from said non real time media server MS to the media client MC with a sending bit-rate is of bit-rate C.

A new service such as a incoming VOIP call is detected and subsequently the control agent of the non real-time media client based on the still available bandwidth of the media client instructs the Real time Control part RTCP1 to request another bit rate for distributing a media asset from the media server MS to the media client MC. Alternatively, at the ending of a service such as a Voice over IP call the control part detects this new status an corresponding available bandwidth and proceeds with instructing the real time protocol part to send a RTSP message instructing the non real-time media client to distribute a media asset at maximum bit rate again.

It is also to be noted that although such a system for non real-time media distribution usually comprises a plurality of media servers and a plurality of media clients, for reasons of simplicity it is chosen to only present a single media server and a single media client, which suffices for explaining the present invention.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for distributing non real-time media in a non real-time media distribution system, said non real-time media distribution system comprising a non-real time media server and a non-real time media client, said non-real time media server and said media client being coupled over a communications network (CN), said method comprising the steps of:
a. distributing said non-real time media to said non real-time media client, over said communications network (CN) coupling said media server (MS) to said media client (MC), **CHARACTERISED IN THAT** said method further comprises the step of:
b. sending a real-time control message from a second control protocol agent (CPA2) at said non-real time media client (MC) to a first control protocol agent (CPA1) at said media server (MS) for controlling said distributing non real-time media; and **in that** said step of distributing said non real-time media from said non real time server to said media client is based on said real-time distribution control message

2. Method for distributing non real-time media in a non real-time media distribution system according to claim 1, **CHARACTERISED IN THAT** said method additionally comprises the step of determining a type of said real-time control message and a content of said real-time control message based on at least one condition.

3. System for distribution of non real-time media from a non real-time media server (MS) to a non-real time media client (MC), said system comprising said non-real time media server (MS) and said media client (MC), said media server (MS) and said media client (MC) being coupled over a communications-network (CN), said non-real-time media server (MS) comprising a distribution part (DP), adapted to distribute non-real time media to said media client (MC), over said communications network (CN) coupling said media server (MS) to said media client (MC), **CHARACTERISED IN THAT** said system further comprises:
a real-time control protocol part (CPA1), adapted to send a real-time control message to said media server (MS) for controlling said distribution of non real-time media; and
c. distribution part (DP), further adapted to distribute said non real-time media from said non real time media server (MS) to said media client (MC) based on said real-time control message.

4. System according to claim 3, **CHARACTERISED IN THAT** said system further comprises a control agent (CA) for controlling said control protocol agent (CPA1) based on at least one condition.

5. Non real time media distribution system according to claim 4, **CHARACTERISED IN THAT** said at least one condition is a current bandwidth use of said media client (MC).

6. Non real time media distribution system according to claim 4, **CHARACTERISED IN THAT** said at least one condition is an intended bandwidth use of said media client (MC).

7. Non real time media distribution system according to claim 4, **CHARACTERISED IN THAT** said at least one condition is an application sharing of Non real time media distribution system.

8. Non real time media distribution system according to claim 4, **CHARACTERISED IN THAT** said at least one condition is a resource availability of said media client (MC).

9. Non real time Media Client (MC) for use in a system for distribution of non real-time media from a non real-time media server (MS) to said non-real time media client (C), said system comprising said non-real time media server (MS) and said media client (MC), said media server (MS) and said media client (MC) being coupled over a communications-network (CN), **CHARACTERISED IN THAT** said media Client (MC) comprises:
a. a real-time control part (RTCP1), adapted to send a real-time control message to said non real-time media server (MS) for controlling said distribution of non real-time media.

10. Non real time Media Client (MC) according to claim 9, **CHARACTERISED IN THA**T non real-time media client (MC) further comprises a control part (CP) for controlling said real-time control part (RTCP1) based on at least one condition.

11. Non-real-time Media server (MS) for use in a system for distribution of non real-time media from said non real-time media server (MS) to a non-real time media client (MC), said system comprising said non-real time media server (MS) and said media client (MC), said media server (MS) and said media client (MC) being coupled over a communications-network (CN), **CHARACTERISED IN THAT** said media server comprises:
a. a real-time control part (RTCP2), adapted to instruct a media distribution part (MDP) to distribute said non real-time media to said media client (MC) based on a real-time control message forwarded by said non real-time media client (MC); and
b. a media distribution part (MDP), adapted to distribute said non real-time media from said non real time media server (MS) to said media client (MC) based on said real-time control message.
